Europäisches Patentamt

European Patent Office

Office européen des brevets

(11) Veröffentlichungsnummer: **0 389 747**

**A2**

(12) **EUROPÄISCHE PATENTANMELDUNG**

(21) Anmeldenummer: **90101348.2**

(51) Int. Cl.⁵: **B01D 11/04, A23F 5/20**

(22) Anmeldetag: **24.01.90**

| | |
|---|---|
| Die Bezeichnung der Erfindung wurde geändert (Richtlinien für die Prüfung im EPA, A-III, 7.3). | Anmelder: **Kriegel, Ernst, Prof.** **Juistweg 51** **D-4300 Essen 1(DE)** |
| (30) Priorität: **28.01.89 DE 3902543** | (72) Erfinder: **Ben-Nasr, Hedi, Dr.** **Friedhofstrasse 32** **D-4650 Gelsenkirchen(DE)** |
| (43) Veröffentlichungstag der Anmeldung: **03.10.90 Patentblatt 90/40** | Erfinder: **Kriegel, Ernst, Prof.** **Juistweg 51** **D-4300 Essen 1(DE)** |
| (84) Benannte Vertragsstaaten: **AT BE CH FR GB IT LI NL** | Erfinder: **Hubert, Peter** **Eilendorfermoorweg 15** **D-2150 Buxtehude(DE)** |
| (71) Anmelder: **Hubert, Peter** **Eilendorfermoorweg 15** **D-2150 Buxtehude(DE)** | Erfinder: **Sievers, Uwe, Dr.** **Am Steingrab 10 b** **D-2150 Buxtehude(DE)** |
| Anmelder: **Ben-Nasr, Hedi, Dr.** **Friedhofstrasse 32** **D-4650 Gelsenkirchen(DE)** | |

(54) **Verfahren zur Übertragung von Coffein von einem Lösungsmittel auf ein anderes.**

(57) Es wird ein kontinuierliches Verfahren zur Übertragung von Koffein von einem Lösungsmittel auf ein anderes beschrieben. Das eine Lösungsmittel ist entweder Wasser oder eine wässrige Lösung und das andere ein überkritisches Gas oder überkritisches Gasgemisch. Das Wasser oder die wässrige Lösung wird in Form von feinen Tröpfchen in das andere Lösungsmittel in einem optimalen Mengenverhältnis eingeführt.

FIG. 2

EP 0 389 747 A2

## Verfahren zur Übertragung von Koffein von einem Lösungsmittel auf ein anderes, wobei ein Lösungsmittel jeweils Wasser oder eine wässrige Lösung und das andere entweder ein überkritisches Gas oder überkritisches Gasgemisch ist

Die Erfindung betrifft ein kontinuierliches Verfahren zur Übertragung von Koffein von einem Lösungsmittel auf ein anderes, wobei ein Lösungsmittel jeweils Wasser oder eine wässrige Lösung und das andere entweder ein überkritisches Gas oder überkritisches Gasgemisch ist.

Bei vielen Entkoffeinierungsverfahren besteht . ein wesentlicher Verfahrensschritt darin, daß Koffein von einem Lösungsmittel auf ein anderes übertragen wird. In der DE-OS 26 38 383 wird ein kontinuierliches Verfahren zum Entfernen des Koffeins aus Kaffee beschrieben. Bei diesem Verfahren wird Rohkaffee mit Wasser behandelt, so daß das Koffein in die wässrige Lösung überführt wird. Anschließend wird mit überkritischem Kohlendioxid das Koffein aus der Extraktionslösung entfernt. Das koffeinhaltige Kohlendioxid wiederum wird mit Wasser behandelt, so daß eine wässrige Koffeinlösung gewonnen wird, wobei das koffeinfreie Kohlendioxid erneut zur Behandlung der wässrigen Extraktionslösung eingesetzt wird. Für die Entkoffeinierung werden jeweils Siebbodensäulen vorgeschlagen. Die Siebbodensäulen bewirken jedoch einen erheblichen Druckverlust und außerdem besteht das Risiko, daß sich die Siebe mit Verunreinigungen zusetzen.

In der EP A1 0010636 wird ein Verfahren zur Entkoffeinierung von $CO_2$ durch Wasser in einer Füllkörperkolonne angegeben. Das koffeinbeladene $CO_2$ und das Wasser fließen im Gegenstrom durch diese Kolonne. In der DE-OS 29 05 078 wird allgemein ein Verfahren zur Entkoffeinierung von Kaffee beansprucht, bei dem die Oberfläche eines dünnen Films einer wässrigen Kaffeeextraktlösung mit $CO_2$ unter überkritischen Bedingungen behandelt wird. Hierdurch wird das Koffein direkt wirksam aus dem wässrigen Koffeinextrakt entfernt und in der überkritischen Kohlendioxidphase abtransportiert.

Zur Realisierung dieses Verfahrens wird als besonders vorteilhaft herausgestellt, die wässrige Kaffeeextraktlösung von oben nach unten durch eine Füllkörperkolonne zu leiten und das Kohlendioxid von unten nach oben im Gegenstromkontakt mit der wässrigen Kaffeeextraktlösung durch die Kolonne zu führen.

Das mit Koffein beladene Kohlendioxid wird dann ebenfalls einer Füllkörperkolonne zugeführt, wo das $CO_2$ durch Wasser von Koffein befreit wird und die wässrige Koffeinlösung einer Destillation zugeführt wird. Bedingt durch die Füllkörper hat auch diese Kolonne den Nachteil, daß sie für das $CO_2$ einen erheblichen Druckverlust bewirkt und außerdem das Risiko besteht, daß sie sich mit Verunreinigungen zusetzt.

Aufgabe der Erfindung ist daher ein Verfahren, das die genannten Nachteile vermeidet und einen höheren Massendurchsatz bei etwa gleichem Wirkungsgrad ermöglicht.

Gelöst wird die Aufgabe erfindungsgemäß entsprechend Anspruch 1 durch ein kontinuierliches Verfahren zur Übertragung von Koffein von einem Lösungsmittel auf ein anderes, wobei ein Lösungsmittel jeweils Wasser oder eine wässrige Lösung und das andere entweder ein überkritisches Gas oder überkritisches Gasgemisch ist, dessen Wirksamkeit im wesentlichen dadurch bestimmt ist, daß das Wasser oder die wässrige Lösung in Form von feinen Tröpfchen in das andere Lösungsmittel eingeführt wird. Dabei ist entweder zuerst das Wasser bzw. die wässrige Lösung oder das überkritische Gas bzw. überkritische Gasgemisch mit Koffein beladen.

Überraschend hat sich gezeigt, daß Tröpfchendispergierung gegenüber Filmkontakt erheblich höhere Umsatzraten bewirkt und daß der Falschaustrag an feinstdispergierten, mit Extrakt beladenen Tröpfchen durch spezielle Auslegung der Düsen und der Tröpfchenausbildung weitgehend vermieden werden kann.

Besonders vorteilhaft ist dabei $CO_2$ als überkritisches Gas, das gegebenenfalls noch Schleppmittel als Zusätze hat.

Bei einem Übergang von Koffein aus beladenem $CO_2$ zu $H_2O$ liegt das optimale Massenverhältnis $CO_2$ zu $H_2O$ bei 5 bis 35, wobei der Bereich 10 bis 18 besonders günstig ist. Im umgekehrten Verhältnis also bei beladenem $H_2O$ betragen die günstigen Massenverhältnisse 20 bis 50, wobei der Bereich 30 bis 40 besonders vorteilhaft ist.

Je kleiner die Wassertröpfchen sind, um so wirksamer ist das Verfahren. Beim Gegenstromverfahren steigt die Wirksamkeit des Verfahrens nur so lange mit kleiner werdendem Durchmesser der Wassertröpfchen, bis die Wassertröpfchen sich nicht mehr gegen den Strom des überkritischen Gases bzw. überkritischen Gasgemisches bewegen. Daher ist es besonders vorteilhaft, wenn die Tröpfchen gerade so groß sind, daß sich der überwiegende Teil der Wassertröpfchen, d. h. mehr als 90 Gew. % der Wassertröpfchen gegen den Strom bewegt.

Vorzugsweise liegt die Größe der Wassertröpfchen zwischen 10 μm und 200 μm oder noch besser zwischen 50 μm und 150 μm.

Die genauere optimale Tropfenverteilung hängt naturgemäß von den jeweiligen Betriebsparametern, insbesondere der Dichte und der Strömungsgeschwindigkeit des überkritischen Lösungsmittels ab und kann durch Vorversuche ermittelt werden.

Besonders vorteilhaft können die Wassertröpfchen mit einer Düse erzeugt werden. Dabei ist besonders günstig, wenn die Düse oder mehrere Düsen hintereinander in einem Waschturm angeordnet sind. Das Betriebsverhalten einer Düse (Tropfengrößenverteilung, Sprühwinkel) hängt nicht nur von der Bauart und dem Wasserdurchsatz, sondern auch von den Eigenschaften (Temperatur, Druck, Strömungsgeschwindigkeit) des überkritischen Lösungsmittels ab. Die Düsen sind mit Vorfiltern ausgestattet, um eventuelle Verschmutzungen zu vermeiden.

Mitgerissene Wassertröpfchen können in vorteilhafter Weise mit einem Tropfenabscheider aufgefangen werden. Dieser Tropfenabscheider kann entweder ein separates Element sein oder er kann sich im Waschturm oberhalb einer Düse oder einer Düsenserie befinden. Je nach Ausgestaltung des Verfahrens können gegebenenfalls auch mehrere Tropfenabscheider in einem Waschturm von Vorteil sein.

Um Energie und Lösungsmittel zu sparen, werden die Lösungsmittel mindestens teilweise im Kreislauf zurückgeführt. Wird das überkritische Gas im Waschturm regeneriert, so wird die wässrige Koffeinlösung aus dem Waschturm abgezogen, nach bekannten Verfahren vom Koffein befreit, das verbleibende, koffeinfreie bzw. koffeinarme Wasser auf Betriebsdruck und Betriebstemperatur gebracht und dem Waschturm wieder zugeführt. In einigen Anwendungen ist es zweckmäßig nur einen Teil des koffeinfreien bzw. koffeinarmen Wassers dem Waschturm erneut zuzuführen und es nur auf den unteren Teil des Waschturms aufzugeben. Die oberen Düsen werden in diesem Fall mit frischem Wasser beaufschlagt. Nach der Entkoffeinierung von $CO_2$ durch Wasser nach diesem Verfahren ist es zur Erhöhung der Leistungsfähigkeit des Verfahrens besonders vorteilhaft, wenn das $CO_2$ danach durch einen Adsorptionsfilter für Koffein geleitet wird, um eine quantitative Abscheidung des Restkoffeins zu erreichen. Besonders geeignet ist hierfür ein Aktivkohlefilter.

Der Gegenstand der Erfindung wird anhand der Zeichnung und Ausführungsbeispielen näher erläutert. Es zeigen:

Fig. 1 einen Waschturm mit Düsen und

Fig. 2 den Waschturm nach Fig. 1 mit Wasser und $CO_2$-Kreislauf.

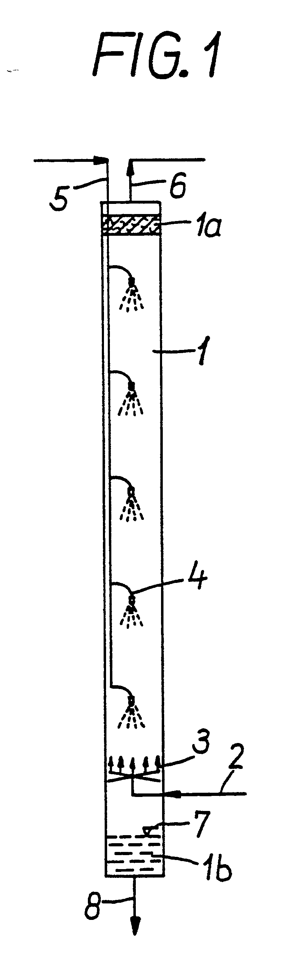

In Fig. 1 gelangt das mit Koffein beladene überkritische Kohlendioxid in den Waschturm 1 über Leitung 2 und wird mit Hilfe des Gasverteilers 3 über den Querschnitt des Waschturms 1 gleichmäßig verteilt. Es strömt dem mit Hilfe der Düsen 4 feindispergierten Wasser entgegen und wird dabei vom Koffein befreit. Das Wasser wird den Düsen 4 über Leitung 5 gleichmäßig zugeführt. Das vom Koffein weitgehend befreite $CO_2$ wird kopfseitig aus dem Waschturm über Leitung 6 abgeführt. Am Kopf des Waschturms 1a befindet sich ein Tropfenabscheider zur Abscheidung der eventuell mitgeschleppten feinen Wassertropfen. Das im Sumpf des Waschturms 1b angesammelte, koffeinhaltige Wasser wird über Leitung 8 abgezogen, wobei das Flüssigkeitsniveau mit Hilfe des Niveaureglers 7 konstant gehalten wird.

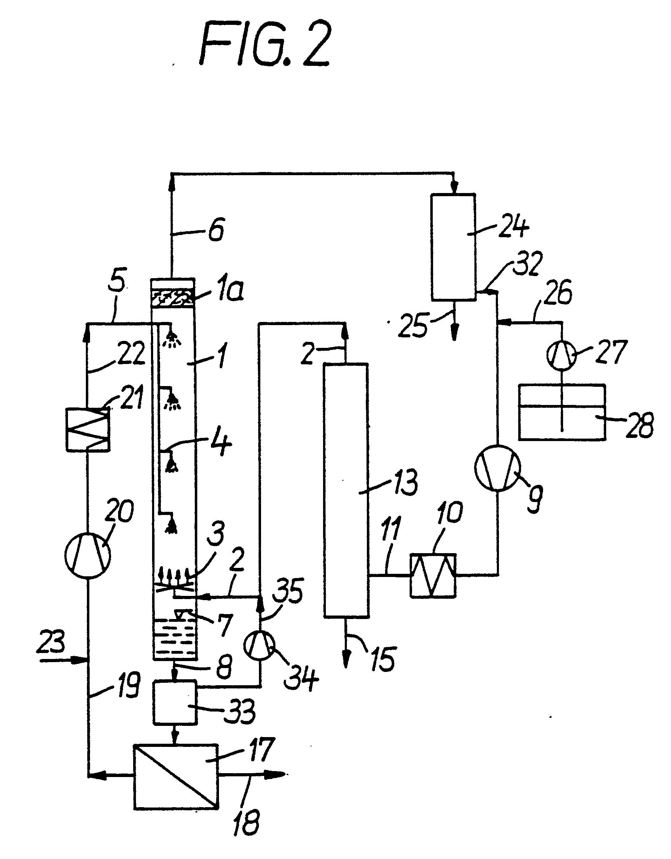

Fig. 2 zeigt den Waschturm 1 mit einem $CO_2$- und einem Wasser-Kreislauf. Im Autoklaven 13 wird das überkritische $CO_2$ mit Koffein beladen und dann dem Waschturm 1 zur Regenerierung über Leitung 2 zugeführt. Das $CO_2$ wird mit der Pumpe 9 auf Betriebsdruck und mit dem Wärmetauscher 10 auf Betriebstemperatur gehalten. Gasverluste werden aus dem $CO_2$-Vorratstank 28 ersetzt: Mit Hilfe der Pumpe 27 wird das Gas auf Betriebsdruck komprimiert und über die Leitung 26 dem $CO_2$-Kreislauf zugeführt.

Das frische und regenerierte $CO_2$ gelangt über Leitung 11 in den Autoklaven 13. Dort wird das $CO_2$ mit Koffein beladen und verläßt den Autoklaven 13 kopfseitig über Leitung 2 und wird dem Waschturm 1 zur Regenerierung zugeführt. Über Leitung 6 gelangt das gereinigte $CO_2$ zum Aktivkohlefilter 24, wo eine quantitative Abscheidung des Restkoffeins erfolgt.

Über Leitung 32 wird dann der $CO_2$-Kreislauf geschlossen.

Über Leitung 25 am Aktivkohlefilter 24 wird das gegebenenfalls ausgeschiedene Wasser abgezogen.

Im Waschturm 1 wird das mit Koffein beladene Wasser über Leitung 8 entnommen, wobei der Flüssigkeitsstand im Sumpf des Waschturms über Niveauregler 7 konstant gehalten wird. Die wässrige Koffeinlösung wird nach dem Entgasen durch Entspannen im Behälter 33 einer Koffeingewinnungseinheit 17 zugeführt. Das freigesetzte $CO_2$ wird mit Hilfe der Pumpe 34 auf Betriebsdruck komprimiert und dem $CO_2$-Kreislauf über Leitung 35 erneut zugeführt. In der Koffeingewinnungseinheit 17 wird die verdünnte Koffeinlösung aufkonzentriert, das aus der konzentrierten Koffeinlösung auskristallisierte Koffein abfiltriert und dem Prozeß über Leitung 18 entnommen. Das koffeinfreie bzw. koffeinarme Wasser aus der Koffeingewinnungseinheit 17 wird über Leitung 19 abgeführt, mit Hilfe der Pumpe 20 auf Betriebsdruck und mit Hilfe des Wärmetauschers 21 auf Betriebstemperatur gebracht und dem Waschturm über Leitung 5 erneut zugeführt. Die Wasserverluste werden über Leitung 23 kompensiert.

**Beispiel 1:**

Der Waschturm 1 hat einen Durchmesser von 58 mm bei einer Höhe von 6 m. Der $CO_2$-Eintritt befindet sich im unteren Teil der Kolonne. Oberhalb des Gasverteilers 3 befinden sich zehn Düsen auf einer Länge von 4,5 m gleichmäßig verteilt. Bei den verwendeten Düsen handelt es sich um Düsen aus Edelstahl mit selbstzentrierendem Einsatz. Es sind Vollkegeldüsen mit einem Sprühwinkel von 30°.

Die Düsen werden mit 8 kg/h destilliertem Wasser gleichmäßig beaufschlagt, entsprechend 0,8 kg/h und Düse. Die Düsen werden damit im unteren Leistungsbereich betrieben, der in Vorversuchen in einer Sichtzelle bei gleichen Betriebsbedingungen als optimal ermittelt wurde, damit eine Zerstäubung des Wassers erfolgt ohne eine nennenswerte Bildung von sehr feinen Wassertropfen zu bewirken, die mit dem $CO_2$-Strom nach oben aufsteigen. Am Kolonnenkopf 1a befindet sich ein Tropfenabscheider aus feinem VA-Stahlgewebe, der eine weitgehende Abscheidung der feinen Wassertropfen, die sich im $CO_2$-Strom befinden, bewirkt. Das $CO_2$ wird entsprechend der schematischen Darstellung in Fig. 2 bei einem Druck von 220 bar und einer Temperatur von 75° C mit Hilfe der Pumpe 9 im Kreislauf gefahren. Der $CO_2$-Massenstrom beträgt 66 kg $CO_2$/h.

Im stationären Zustand beträgt die Beladung des $CO_2$ mit Koffein in Leitung 2 339 mg Koffein/kg $CO_2$ und in Leitung 6 13 mg Koffein/kg $CO_2$. Der Wirkungsgrad der Druckwäsche im Waschturm 1 beträgt damit bei kontinuierlicher isobarer und isothermer Fahrweise 96 % Die Koffeinkonzentration der wässrigen Lösung (Leitung 8) beträgt 0,28 Gew. %.

**Beispiel 2:**

Die Anlage unterscheidet sich gegenüber Beispiel 1 nur dadurch, daß im Waschturm 1 zwischen den oberen fünf Düsen und den unteren fünf Düsen ein geeigneter Tropfenabscheider untergebracht wurde. Im Unterschied zu Beispiel 1 ist der $CO_2$-Durchsatz auf 140 kg/h erhöht worden und die $CO_2$-Beladung mit Koffein in Leitung 2 beträgt 240 mg Koffein/kg $CO_2$.

Im Waschturm 1 wird diese Konzentration reduziert auf 29 mg Koffein/kg $CO_2$. Der Wirkungsgrad beträgt damit 88 %. Unter gleichen Bedingungen aber ohne Füllkörperschüttung in der Kolonnenmitte konnte ein Wirkungsgrad von lediglich 75 % erreicht werden. Dieser Leistungsabfall ist im wesentlichen bedingt durch zu starke Rückvermischungen in der Kolonne, weil die sehr feinen Wassertropfen teilweise mit dem $CO_2$-Strom nach

oben ger is sen werden. Der Tropfenabscheider wirkt diesem Phänomen entgegen. Die feinen Wassertropfen werden abgeschieden und gelangen so nicht in den oberen Teil der Kolonne.

**Ansprüche**

1. Kontinuierliches Verfahren zur Übertragung von Koffein von einem Lösungsmittel auf ein anderes, wobei ein Lösungsmittel jeweils Wasser oder eine wässrige Lösung und das andere entweder ein überkritisches Gas oder überkritisches Gasgemisch ist, dadurch gekennzeichnet, daß das Wasser oder die wässrige Lösung in Form von feinen Tröpfchen in das andere Lösungsmittel in einem optimalen Mengenverhältnis eingeführt wird, wobei entweder zuerst das Wasser bzw. die wässrige Lösung oder das andere Lösungsmittel mit Koffein beladen ist.

2. Verfahren zur kontinuierlichen Übertragung von Koffein von einem Lösungsmittel auf ein anderes nach Anspruch 1 dadurch gekennzeichnet, daß die Lösungsmittel $CO_2$ und Wasser oder eine wässrige Lösung sind.

3. Verfahren nach den Ansprüchen 1 oder 2 dadurch gekennzeichnet, daß die Wassertröpfchen eine Größe von 10 bis 200 $\mu$ haben.

4. Verfahren nach den Ansprüchen 1 oder 2 dadurch gekennzeichnet, daß die Wassertröpfchen eine Größe von 50 bis 150 $\mu$ haben.

5. Verfahren nach einem der Ansprüche 1 bis 4 dadurch gekennzeichnet, daß die Wassertröpfchen in das strömende überkritische Lösungsmittel eingeführt werden und gerade so groß sind, daß sich der überwiegende Teil der Wassertröpfchen gegen den Strom bewegt.

6. Verfahren nach einem der Ansprüche 1 bis 4 dadurch gekennzeichnet, daß die Wassertröpfchen, die in das strömende überkritische Lösungsmittel eingeführt werden, gerade so groß sind, daß sich mehr als 90 Gew. % der sich ausbildenden Wassertröpfchen gegen den Strom bewegt.

7. Verfahren nach einem der Ansprüche 1 bis 6 dadurch gekennzeichnet, daß die Wassertröpfchen mit mindestens einer Düse erzeugt werden.

8. Verfahren nach Anspruch 7 dadurch gekennzeichnet, daß eine oder mehrere Düsen in mindestens einem Waschturm angeordnet sind.

9. Verfahren nach Anspruch 8 dadurch gekennzeichnet, daß sich mindestens oberhalb einer Düse ein Tropfenabscheider befindet.

10. Verfahren nach einem der Ansprüche 1 bis 9 dadurch gekennzeichnet, daß die Lösungsmittel mindestens teilweise im Kreislauf zurückgeführt werden.

11. Verfahren nach Anspruch 10 dadurch gekennzeichnet, daß das überkritische Lösungsmittel nach weitgehender Abtrennung von Koffein durch ein Adsorptionsfilter für Koffein geleitet wird.

# FIG. 1

# FIG. 2